# EUROPEAN PATENT APPLICATION

(11) **EP 4 080 641 A1**
(43) Date of publication of application: **26.10.2022**
(21) Application number: 21170148.7
(22) Date of filing: 23.04.2021
(51) Int. Cl.: H01M 10/12, H01M 50/403, H01M 50/414, H01M 50/429, H01M 50/434, H01M 50/443, H01M 50/489, H01M 50/491, H01M 50/446

(54) **BATTERY SEPARATOR FOR REDUCING WATER LOSS**

(71) Applicant: Amer-Sil sa, 8281 Kehlen (LU)
(72) Inventor: DONTEN, Mateusz, Kehlen (LU)
(74) Representative: Brantsandpatents bvba

(57) **Abstract**

The current invention relates to a Battery separator comprising silica, PVC, in an amount so that the ratio of PVC to silica is between 2:1 and 2:5 by weight, and natural rubber, in an amount of 2 to 40 wt.% with respect to the weight of the battery separator. The current invention also relates to a method for producing said battery separators. The current invention further relates to the use of such battery separators in lead-acid batteries.

## Description

### FIELD OF THE INVENTION

The present invention relates to battery separators, in particular battery separators suitable for reducing water losses and antimony poisoning, and method of production thereof.

### BACKGROUND

During the cycling of conventional batteries which use antimony alloy grids, a decline of the voltage at the end of a recharge is recorded with progressing cycle life. The voltage decrease occurs mainly during the overcharge part of the recharge, that is, when only the gassing reactions are involved. It has been found that primarily the hydrogen evolution at the negative electrode that becomes facilitated, and the reaction takes place at a lower voltage level.

The reason for this behavior is that in the event of corrosion of the grid of rechargeable batteries, the antimony comes out while charging. Due to corrosion, antimony releases from the alloy as antimony- (+V)-ions and is mostly adsorbed at the lead dioxide inside the positive electrode. Some of the antimony (+V)- ions diffuse through the separator, used as a distance-keeping component between the positive and the negative electrodes, and get into contact with the negative electrode, where they are reduced to antimony-(+III)-ions, and are also finally reduced to metallic antimony. On subsequent charging, antimony gets deposited on the negative electrode, that is, the antimony plates out onto the negative electrode. This metallic antimony deposition is considered to be "poisonous", because it allows for evolution of gaseous hydrogen to proceed more easily than what is achieved from pure lead, and consequently, such phenomenon results in the loss of water. It also facilitates the hydrogen evolution with all subsequent negative effects. Excess charge develops into electrolysis of water. The process of electrolysis starts prematurely, even at normal charging voltage. Thus, the major problem with the use of lead-antimony alloys in grids has been the transfer of the antimony to the negative plate during cycling where it increases the rate of gassing. Facilitated hydrogen evolution means a lower charging efficiency, resulting in higher water consumption, increased battery temperature and reduced shell life. These issues are known in the art as antimony poisoning and water loss.

An issue with commercial separators that reduce the effects of antimony poisoning and water loss is their high electric resistance, porosity and oxidative stability. An issue with commercial PE-based separators is that their reduction to the effects of antimony poisoning is limited and in many applications insufficient.

EP 3 393 639 discloses a porous membrane comprising PVC and a sulfuric acid precipitated silica.

### SUMMARY OF THE INVENTION

The present invention and embodiments thereof serve to provide a solution to one or more of above-mentioned disadvantages. To this end, the present invention relates to a battery separator according to claim 1.

Preferred embodiments of the device are shown in any of the claims 2 to 10.
A specific preferred embodiment relates to an invention according to claim 3. Ribbed smoked sheet grade natural rubber was found particularly well suited in combination with PVC and silica.

In a second aspect, the present invention relates to a method according to claim 11. More particular, the method as described herein provides processability to the PVC, silica and natural rubber blends obtaining an uniform dispersion. This is difficult to achieve when utilizing PVC as well as natural rubber which are known to be difficult to process, particularly when processing aids and plasticizer consumption is kept to a minimum.

In a third aspect the present invention relates to a use according to claim 15. The use as described herein provides a lead-acid battery with significantly reduced water loss.

### DETAILED DESCRIPTION OF THE INVENTION

The present invention concerns a battery separator comprising silica, PVC, in an amount so that the ratio of PVC to silica is between 2:1 and 2:5 by weight, and 2 to 40 wt.% natural rubber.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

The expression "% by weight", "weight percent", "%wt" or "wt%", here and throughout the description unless otherwise defined, refers to the relative weight of the respective component based on the overall weight of the formulation. Whereas the terms "one or more" or "at least one", such as one or more or at least one member(s) of a group of members, is clear *per se,* by means of further exemplification, the term encompasses *inter alia* a reference to any one of said members, or to any two or more of said members, such as, e.g., any ≥3, ≥4, ≥5, ≥6 or ≥7 etc. of said members, and up to all said members.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

### Separator

In a first aspect, the invention provides battery separator comprising:
- silica,
- PVC, in an amount so that the ratio of PVC to silica is between 2:1 and 2:5 by weight, and
- natural rubber, in an amount of 2 to 40 wt.% with respect to the weight of the battery separator.

In a preferred embodiment, said battery separator comprises between 2 and 30 wt.% of natural rubber, more preferably said battery separator comprises between 3 and 30 wt.% of natural rubber, more preferably said battery separator comprises between 4 and 25 wt.% of natural rubber, more preferably said battery separator comprises between 5 and 20 wt.% of natural rubber, most preferably said battery separator comprises between 5 and 15 wt.% of natural rubber.

In a preferred embodiment, the natural rubber is a ribbed smoked sheet (RRS).

In a further embodiment, PVC can be substituted for a mixture of PVC and an elastomer. Preferably said elastomer and PVC are both is swellable or dissolvable in a common solvent. In a more preferred embodiment, PVC is substituted by a mixture of PVC and NBR. This results in improved mechanical properties, particularly flexibility.

In a preferred embodiment, said silica is precipitated silica. In a more preferred embodiment, said silica is sulfuric acid precipitated silica. The use of sulfuric acid precipitated silica provides a hydrophilic membrane and prevents addition of wetting agents which is source of leachables.

In a preferred embodiment, the PVC is devoid of oils and/or plasticizers. A separator devoid of oils and/or plasticizers thereby improving oxidation resistance of the membrane and minimizing or having no leachable amounts.

In another preferred embodiment, a thermal stabilizer is added. In a more preferred embodiment, said thermal stabilizer is epoxidized soybean oil.
is utilized. Plasticizers are well-known in the art to finetune the rheology and improve the processability of PVC. In a further preferred embodiment, the plasticizer comprises epoxidized soybean oil.

The viscosity of the polyvinyl chloride is at least 61, preferably at least 62, more preferably at least 63, most preferably at least 64. Said viscosity is at most 70, preferably at most 69, more preferably at most 68, most preferably at most 67. Viscosity of the PVC is preferably around 65. Viscosity is measured according to ISO 1628-2 and can be comprised between any of the aforementioned values.

Preferably, the plasticizer absorption of the PVC as determined by ISO 4608 is of from 20% to 30%, preferably of from 22% to 28%, more preferably of from 24% to 26%.

In a preferred embodiment, the silica represents between 0.7 and 2.5 times the weight of the PVC.

In a preferred embodiment, The membrane is devoid of hydrochloric acid precipitated silica. This is advantageous as the membrane will have low metallic impurities, in particular low free chloride content. Preferably, the membrane free chloride content is at maximum 180 ppm, preferably at maximum 100 ppm, more preferably at maximum 70 ppm, most preferably at maximum 60 ppm. Free chloride content is measured via standard titration with silver nitrate. Preferably the following titration method is followed :
- In a 150 ml beaker, a quantity between 1.5 and 2.5 g of sample is weighed with an accuracy of 0.01 g;
- A quantity of 95 ml of the methanol-nitric acid mixture is added using Dispensette and a small magnet is added to the beaker which is then placed on the magnetic stirrer;
- The sample is titrated using silver nitrate. Preferably by addition of 0.10 ml portions of silver nitrate solution with a dilution of 0.004 normality.
- The amount of silver nitrate added indicates the amount of silver nitrate required to convert free chloride ions to silver chloride (AgCl). From this the concentration of free chloride ions in the sample is determined.
Chlorides catalytic effect on PVC degradation is absent in the membranes according to the invention. Consequently, the membrane can be washed under very acid and/or oxidative conditions without loss of integrity.

The membranes of the invention present high mechanical resistance. Said mechanical resistance is measured by shrinkage test; measuring the percentage of thickness loss of membranes heated for 30 min at a temperature of at least 65°C, preferably 80°C. The membranes of the invention showed reduced thickness loss compared to membranes of the prior art which were similarly heated for 30 min at 80°C. Without being restrictive, the high mechanical resistance of the membranes of the invention is due to their composition, in particular to the presence of PVC, more in particular to the presence of PVC having a viscosity of at least 60. The improved mechanical resistance is particularly pronounced for corrugated membranes. Indeed, corrugated membranes according to the invention showed minor thickness loss compared to corrugated membranes of the prior art.

The membranes of the invention present high thermal resistance. Said thermal resistance is measured by determining the time after which the membrane degrades at a given temperature. The time after which membranes of the invention degraded at a given temperature was always longer than the time at which membranes of the prior art degraded at the same temperature. Without being restrictive, the high thermal resistance of the membranes of the invention is due to their composition, in particular to the presence of PVC, more in particular to the presence of PVC having a viscosity of at least 60. The thermal stability of the membrane is preferably at least 30 min, preferably at least 40 min, more preferably at least 60 min. The thermal stability is measured according to DIN 53381 part 1.

In a preferred embodiment, the battery separator comprises Ca/Zn thermal stabilizers. Ca/Zn thermal stabilizers further improve the thermal resistance of the separator.

The composition of the membranes of the invention, resulting in improved resistance to oxidation, temperature and mechanical stress, allows reduction of the membrane's backweb thickness without altering the membrane's properties. This is advantageous compared to the membranes of the prior art for which reduction of the backweb thickness translates into alteration of the membrane's properties such as reduced resistance to oxidative solutions.

Preferably, the membrane solvent content is at maximum 0.5% by weight and has an extractible content of less than 1% in total weight after extraction in hexane and/or in methanol. The solvent content is measured by gas chromatography after complete dissolution in Dimethylformamide. These properties of the membrane are advantageous as oil and/or solvents are prevented from leaching out of the membrane. The extractible content of membranes available on the market is more than 3% in total weight after extraction in hexane and methanol. The extractible content of membranes according to an embodiment of the invention is less than 0,5% after extraction in methanol and 0,5% after extraction in hexane.

Preferably, the membrane water content is at maximum 4% by weight. The water content is measured using a standard scale for humidity known to the person skilled in the art.

The membrane has a volume porosity of at least 60%, preferably at least 65%, more preferably at least 68%, even more preferably at least 70%, most preferably 75%.

Preferably the median pore size lies between 0.1 µm and 2.0 µm, more preferably between 0.3 µm and 1.5 µm. The Hg porosity is preferably between 1 cc/g and 2 cc/g, more preferably between 1.2 and 2 cc/g. Porosity measures are determined by Hg porosimetry.

The membrane might be flat meaning that both the upper surface and the lower surface are devoid of deformations. The membrane might also be formed into a ribbed and/or a corrugated form. The deformations, i.e. ribs or corrugations, can be located on one face or both faces of the membrane. In the case of deformations on both faces, the deformations can face each other or can be shifted from each other. Corrugated and/or ribbed membranes provide a significant functional surface increase when the membrane is functionalized. The surface increases up to two fold compared with the flat membranes. In addition, ribs provide an integrated spacer to the membrane. This avoids the use of extra means such as plastic grids to have spacers on the membrane.

The ribs on each surface of the membrane might have variable or constant heights. The distance separating two consecutive ribs on one surface of the membrane might be variable or constant. The distance separating two consecutive ribs on the upper surface might be similar or different compared to the distance separating two consecutive ribs on the lower surface of the membrane. Preferably, the distance separating two consecutive ribs on one surface of the membrane is of from 0.5 to 15 mm, preferably from 1 to 13 mm, more preferably from 3 to 12 mm.

The membrane might be monomodal corrugated membrane having a pore size between 0.3 and 10 µm or bimodal corrugated membrane comprising a first group of pores having a diameter of at maximum 0.3 µm, preferably at maximum 0,15 µm, most preferably at maximum 0,10 µm and a second group of larger pores having a diameter between 0.5 and 10 µm, preferably between 0.5 and 5 µm, more preferably about 1 µm. Porosity measures are determined by Hg porosimetry.

The values given to pore size are average pore size. It is to be understood that the pore size depends on the intended application of the membrane. Said pore size can therefore be adjusted according to intended use of the membrane. Adjustment of the pore size of the membrane is known to the person skilled in the art. The pore size can be adjusted during the fabrication and/or after the fabrication using post treatment method.

The overall thickness of the membrane is between 0.2 and 1.5 mm, preferably between 0.3 and 1.2 mm, more preferably between 0.4 and 1 mm, most preferably between 0.5 and 0.9 mm. The thickness of the membrane can be any values comprised between the aforementioned ranges. The overall thickness of the membrane can also be of from 0.2 to 5 mm, preferably of from 0.8 to 1.8 mm.

The membrane is preferably a "self-supporting membrane", which means that the membrane supports its own weight, it is able to hold firm without support and does not collapse on itself. It means for instance a membrane which can be bent but not folded unlike a paper sheet like membrane. This term does hence not exclude flexible membranes to the extent that they meet such definition. The membrane, as it is self-supporting, withstands high pressures of from 40 psi to 60 psi, preferably from 45 psi to 58 psi , more preferably about 56 psi. The membrane according to the invention is also resistant to the measures usually taken to limit fouling, such as the backwashing. It enables long-term operation without the need for frequent intensive cleaning. Moreover, it is easy to assemble into modules.

### Method

In a second aspect, the invention relates to a method for manufacturing a battery separator comprising:
- formation of a wet PVC silica blend comprising PVC, silica and a solvent;
- addition of a natural rubber to said wet PVC-silica blend, in an amount so that the weight of rubber in the final product is comprised between 2 and 40 wt.%, thereby obtaining a rubber PVC silica blend;
- extrusion of said rubber PVC silica blend;
- extruding and/or calendaring said rubber PVC silica thereby obtaining a raw membrane;
- liquid phase extraction of the solvents from said raw membrane in order to form a porous membrane; and
- optional deformation of at least one surface of the membrane so as to obtain a corrugated or ribbed membrane.

In a preferred embodiment, said solvent chosen from the list of: ketones, more preferably cyclohexanone, water and mixtures thereof.

In a preferred embodiment, forming said wet PVC silica blend comprises the steps of:
- formation of a powder blend comprising PVC and at least one inorganic filler having pores;
- addition of a first solvent so that the first solvent is absorbed in the pores of the inorganic filler, said first solvent is chosen from the group of ketones;
- addition of a second solvent so as to displace the first solvent from the pores of the inorganic filler, said second solvent is water; thereby forming said wet PVC silica blend.

In a preferred embodiment, said first solvent is cyclohexanone.

In a preferred embodiment, the extrusion step is carried out at a temperature of from 25°C to 50°C, more preferably from 19 to 25°C. The calendaring step is preferably performed at room temperature thereby simplifying production process of the membrane and considerably reducing production costs.

The powder blend viscosity is at least 200 m.g., preferably at least 260 m.g., more preferably at least 270 m.g., even more preferably at least 280 m.g. and most preferably at least 290 m.g.. Said viscosity is at most 350 m.g., preferably at most 340 m.g., more preferably at most 330 m.g., even more preferably at most 320 m.g., most preferably at most 310 m.g. even most preferably at most 300 m.g.. Viscosity of the powder blend can be any value comprised between the aforementioned values. Said viscosity provides good consistency to the powder blend and allows extrusion and/or calendaring of the powder at room temperature. Our experiments showed that blends having viscosity lower than 200 m.g. or higher than 350 m.g. cannot be extruded and/or calendared at room temperature. Viscosity is measured for the powder blend in molten state using a Brabender rheometer operating at a temperature of 40°C with a rotational speed of its rotors equal to 40 revolutions per minute.

The membrane of the invention shows high mechanical resistance and high thermal stability compared to the membranes of the prior art.

In a preferred embodiment, PVC is used as antistick agent for the natural rubber, particularly RSS granulates to avoid contamination of the separator with regular antistick agents such as talk.

In a preferred embodiment, the natural rubber is pre-treated by stirring in cyclohexanone until the mixture forms a uniform gel of swollen rubber. A mixture of water and cyclohexanone, for example 6 vol.% water, is workable but may lead to issues to dissolve the natural rubber therein. These issues can be overcome by raising the temperature, for example to a temperature of 40, 60 or 80°C as necessary. In a more preferred embodiment, water-free cyclohexanone is utilized. The inventors found that RSS rubber would dissolve and gel in water-free cyclohexanone at ambient temperatures, allowing a reduction in energy requirements. In a more preferred embodiment, RSS grade rubber was pre-treated in water-free cyclohexanone for at least 12 hours, preferably about 24 hours. The ratio by weight of RSS rubber to cyclohexanone was between 20:80 and 50:50, more preferably between 25:75 and 40:60, most preferably between 30:70 and 35:65. This pretreatment ensured good dispersion of the natural rubber into the wet PVC silica blend. It further provided for improved processability.

### Use

In a third aspect, the invention relates to the use of a battery separator according to the first aspect of the invention in a lead-acid battery.

The invention is further described by the following non-limiting examples which further illustrate the invention, and are not intended to, nor should they be interpreted to, limit the scope of the invention.

### EXAMPLES

### Examples 1-2

A series of separators were created from PVC with a viscosity of 65 according to ISO 1628-2 and sulfuric acid precipitated silica. The ratio of silica to PVC is 1:1. Comparative example 1 did not include any natural rubber. Example 2 further included 10 wt.% of natural rubber coagulated from latex of thereof in the final separator.

PVC-Silica blend is prepared with cyclohexanone and water. Water content in the blend in example 2 is reduced to compensate the water introduced with the latex additive in the extrusion step. Due to the low water content the rheology of the PVC-Silica wet blend in example 2 is different than for comparative example 1.

During extrusion the extruder is fed with the PVC-Silica wet blend and latex in proportion so that the ratio of PVC and silica to Natural rubber in the final dry product is 90% to 10%. The latex coagulates immediately in contact with the PVC silica blend in the extruder giving pieces of coagulated natural rubber. Due to extruder screw action these pieces are dispersed uniformly in the extrude dough.

Higher than normal (without Latex) pressure is reached during the extrusion process since the coagulated latex containing dough is stiffer than the regular PVC-Silica dough used in comparative example 1.

Calendaring, extraction and drying of the separator is done in the same way for both examples 1 and 2. Calendaring is performed at room temperature.

A battery separator according to example 2, containing PVC silica and 10% w/w of natural rubber coming from coagulated latex was produced.

Porosity, pore size distribution, electric resistance, thermal and oxidative stability resemble comparative example 1. A slight increase in electric resistivity was observed for some production batches but they do not appear as significant differentiations in battery operation.

Mechanical properties of example 2 are noticeably decreased in comparison to comparative example 1. In particular the tensile strength of the material is up to 50% lower. The product also shows lower elongation at break that is in line with the lower tensile forced reached at brake.

Example 2 has demonstrated ability to diminish water losses in lead acid batteries, particularly those susceptible to poisoning with antimony. This ability was demonstrated both in laboratory tests and in battery performance tests. The extent of this ability is a clearly noticeable improvement compared to rubber free separators but not as good as in case of rubber-based separators.

### Example 4

RSS granulates were pre-treated by stirring in water-free cyclohexanone for a period of 24 hours. The ratio of RSS to cyclohexanone was 35:65 by weight. The pretreatment resulted in a uniform gel of swollen rubber. This composition of the gel was found suitable for further processing with the extrusion equipment.

### Examples 5-7

Three separators were prepared using the composition of comparative example 1 with the addition of 5 to 15 wt.% RSS grade natural rubber which was pre-treated according to example 4.

Example 5 utilizes the materials of comparative example 1 in addition to 5 wt.% RSS natural rubber.

Example 6 utilizes the materials of comparative example 1 in addition to 10 wt.% RSS natural rubber.

Example 7 utilizes the materials of comparative example 1 in addition to 15 wt.% RSS natural rubber.

During extrusion the extruder is fed with the PVC-Silica wet blend as described in comparative example 1 and RSS gel according to example 4. The rate of the feed is set so that the mass of RSS in the gel represents 5, 10 or 15% of the final dry mass of the separator. The remaining 95, 90 or 85% is constitute by PVC and Silica.

The extruder dough had lower viscosity compared to comparative example 1, and therefor lower extrusion pressures are experienced. The extruder screw is effective in homogenizing the PVC-Silica bled together with the RSS gel. We have found uniform content of RSS in the resulting separator without any additional measures in the process.

Calendaring, extraction and drying of the separator is done in the same way. Despite the larger amounts of cyclohexanone in the calendared sheet, no difficulties were observed with extracting it. The resulting product of examples 5, 6 and 7 do not show noticeably higher content of cyclohexanone compared to comparative example 1.

Separator containing PVC-silica and 5, 10 or 15% w/w of RSS natural rubber is produced in examples 5, 6 and 7 respectively.

Porosity, pore size distribution, electric resistance, thermal and oxidative stability resemble those of comparative example 1. A slight increase in electric resistivity is observed for some production batches. The increase of electric resistivity is more likely for the higher RSS content examples. This effect can be controlled by adjusting the PVC-Silica ratio on the formulation i.e. by adjusting of the polymers (RSS+PVC) to silica ratio.

Mechanical properties of examples 5, 6 and 7 are equal or improved when compared to comparative example 1. The improvement is higher with rising RSS content. Example 7 with 15 wt.% RSS can be considered not brittle.

Examples 5, 6 and 7 have demonstrated ability to diminish water losses in lead acid batteries, particularly those susceptible to poisoning with antimony. This ability was demonstrated so far in laboratory tests in which water splitting currents were supressed equally well as by commercial rubber separators (Flex-Sil) for examples 6 and 7.

The ability to diminish water losses for examples 6 and 7 were better than those obtained for example 2.

The ability to diminish water losses for example 5 were comparable to those obtained for example 2.

It is clear that the method according to the invention, and its applications, are not limited to the presented examples.

The present invention is in no way limited to the embodiments described in the examples and/or shown in the figures. On the contrary, methods according to the present invention may be realized in many different ways without departing from the scope of the invention.

### Comparative examples 8-9

Examples 2, 5, 6 and 7 were compared to commercially available separators used for antimony suppression. Comparative example 8 is a DC215 Cell Force ^{®} separator. Comparative example 9 is a Flex-Sil ^{®} separator (TC200).

The results are shown in table 1. The membrane separators according to the present invention offer an antimony suppression equal to that of the best tested product, with lower electric resistance and higher volume porosity. It offers significantly higher antimony suppression than products with similar electric resistance. Furthermore, these membranes show far superior oxidation resistance.

**Table 1 : Properties of examples 2, 5, 6 and 7 and c. ex. 8 and 9.**

| | C. Ex. 8 | C. Ex. 9 | Ex. 2 | Ex. 5 | Ex. 6 | Ex. 7 |
|---|---|---|---|---|---|---|
| Thickness (mm) | 2.17 | 2.02 | 0.63 | 2.45 | 2.52 | 2.34 |
| Backweb (mm) | 0.48 | 0.40 | 0.58 | 0.57 | 0.58 | 0.54 |
| Grammage (g/m²) | X | 630 | 309 | 351 | 377 | 377 |
| ER (mΩ.cm²) | 275 | 730 | 221 | 115 | 175 | 145 |
| Hg porosity (cc/g) | X | | | 1.86 | 1.63 | 1.86 |
| Median pore size (µm) | X | | | 1.13 | 1.10 | 1.27 |
| Volume porosity (%) | 55 | 31.3 | 63 | 75.2 | 73.6 | 75 |
| Acid displacement (ml/m²) | 402 | 488 | 199 | 214 | 240 | 245 |
| Oxidation (% mass loss) | 9.8 | 18.0 | 1.0 | 1.5 | 0.7 | 0.6 |
| Tensile strength (N/cm²) | X | 355 | 460 | 249 | 283 | 192 |
| Elongation (%) | X | 7.6 | 16 | 15 | 21 | 24 |
| Thermal stability (min) | X | | 610 | 300 | 325 | 531 |
| Free chlorine (ppm) | X | - | | 56 | 58 | 41 |
| Sb suppression (%) (lead acid single plate cycling test) | Low to good | Perfe ct | Moder ate | Moder ate | Good to perfect | Good to perfect |

## Claims

1. Battery separator comprising:
- silica,
- PVC, in an amount so that the ratio of PVC to silica is between 2:1 and 2:5 by weight, and
- natural rubber, in an amount of 2 to 40 wt.% with respect to the weight of the battery separator.

2. Battery separator according to claim 1, wherein the battery separator comprises between 5 and 30 wt.% of natural rubber.

3. Battery separator according to any of the claims 1-2, wherein the natural rubber is a ribbed smoked sheet (RSS).

4. Battery separator according to any of the claims 1-3, wherein the silica is sulfuric acid precipitated silica.

5. Battery separator according to any of the claims 1-4, wherein the battery separator has a porosity of at least 60%, preferably at least 75%.

6. Battery separator according to any of the claims 1-5, wherein the battery separator has a median pore size, determined by Hg porosimetry, of from 0.1 to 2.0 µm.

7. Battery separator according to any of the claims 1-6, wherein the battery separator has a water content of at most 4 wt.%.

8. Battery separator according to any of the claims 1-7, wherein the battery separator has a solvent content of at most 0.5 wt.%.

9. Battery separator according to any of the claims 1-8, wherein the battery separator has a free chloride content of at most 180 ppm.

10. Battery separator according to any of the claims 1-9, wherein the battery separator comprises NBR.

11. Method for manufacturing a battery separator comprising:
- formation of a wet PVC silica blend comprising PVC, silica and a solvent;
- addition of a natural rubber to said wet PVC-silica blend, in an amount so that the weight of rubber in the final product is comprised between 2 and 40 wt.%, thereby obtaining a rubber PVC silica blend;
- extrusion of said rubber PVC silica blend;
- extruding and/or calendaring said rubber PVC silica thereby obtaining a raw membrane;
- liquid phase extraction of the solvents from said raw membrane in order to form a porous membrane; and
- optional deformation of at least one surface of the membrane so as to obtain a corrugated or ribbed membrane.

12. Method for manufacturing a battery separator according to claim 11, said method comprising:
- formation of a powder blend comprising PVC and at least one inorganic filler having pores;
- addition of a first solvent so that the first solvent is absorbed in the pores of the inorganic filler, said first solvent is chosen from the group of ketones;
- addition of a second solvent so as to displace the first solvent from the pores of the inorganic filler, said second solvent is water; thereby forming said wet PVC silica blend.

13. Method for manufacturing a battery separator according to claim 12, wherein said first solvent is cyclohexanone.

14. Method for manufacturing a battery separator according to any of claims 11-13, wherein the calendaring step is carried out at a temperature of from 19 to 25°C.

15. Use of a battery separator according to any of claims 1-10 in a lead-acid battery.
